(19) Europäisches Patentamt
European Patent Office
Office européen des brevets

(11) **EP 3 350 269 B1**

(12) **EUROPÄISCHE PATENTSCHRIFT**

(45) Veröffentlichungstag und Bekanntmachung des Hinweises auf die Patenterteilung:
**03.06.2020 Patentblatt 2020/23**

(51) Int Cl.:
**C09D 177/00** (2006.01)   **C09D 179/00** (2006.01)

(21) Anmeldenummer: **16758094.3**

(22) Anmeldetag: **12.08.2016**

(86) Internationale Anmeldenummer:
**PCT/EP2016/025086**

(87) Internationale Veröffentlichungsnummer:
**WO 2017/045766 (23.03.2017 Gazette 2017/12)**

(54) **SUBSTRAT UND/ODER UNTERGRUND MIT EINEM QUELLFÄHIGEN BESCHICHTUNGSSYSTEM**

SUBSTRATE AND/OR BASE WITH SWELLABLE COATING

SUBSTRAT ET / OU BASE AVEC REVÊTEMENT GONFLABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.09.2015 DE 102015011691**

(43) Veröffentlichungstag der Anmeldung:
**25.07.2018 Patentblatt 2018/30**

(73) Patentinhaber: **Fraunhofer Gesellschaft zur Förderung der angewandten Forschung E.V.**
**80686 München (DE)**

(72) Erfinder:
• **SAINI, Vimal**
**47053 Duisburg (DE)**
• **BRAESCH, Katrin**
**45731 Waltrop (DE)**
• **VON TAPAVICZA, Max**
**30175 Hannover (DE)**
• **WACK, Holger**
**44137 Dortmund (DE)**
• **ELOO, Christina**
**58332 Schwelm (DE)**

(74) Vertreter: **Schleitzer, Dirk-Karsten**
**Von Rohr**
**Patentanwälte Partnerschaft mbB**
**Rüttenscheider Straße 62**
**45130 Essen (DE)**

(56) Entgegenhaltungen:
**WO-A1-01/23479      WO-A1-97/08579**
**WO-A1-2005/121260   DE-A1-102011 009 980**
**US-A- 5 817 713**

**Beschreibung**

Die Erfindung betrifft ein Substrat und/oder einen Untergrund mit einem quellfähigen Beschichtungssystem als Schutzbeschichtung, insbesondere als Korrosionsschutzbeschichtung für metallische Substrate, mit wenigstens einer Funktionsschicht. Darüber hinaus betrifft die vorliegende Erfindung ein Verfahren zur Herstellung einer solchen Schutzbeschichtung auf einem Substrat und/oder einem Untergrund und ein Beschichtungsmaterial zur Ausbildung einer Funktionsschicht eines quellfähigen Beschichtungssystems.

Aus dem Stand der Technik ist bekannt, dass thermoplastische Pulverbeschichtungen als Korrosionsschutzbeschichtungen in stark korrosiven Umgebungen, wie z.B. im Seewesen, der Landwirtschaft und der Industrie, sowie in mäßig korrosiven Umgebungen, wie z.B. bei Straßenleuchten, Wegweisern, Zäunen und Rohrleitungen von Trink- und Abwassernetzen, eingesetzt werden. Aufgrund der Molekülstruktur weisen thermoplastische Materialien eine vergleichsweise hohe Elastizität auf und können so Stöße und Kratzer besser abfangen als duroplastische Materialien. Eine oft bemängelte höhere Schichtdicke von thermoplastischen Überzügen im Vergleich zu duroplastischen Überzügen ist im Bereich des Korrosionsschutzes nicht von Nachteil, da dort typischerweise höhere Schichtdicken eingesetzt werden, um einen ausreichenden Schutz zu erreichen. Bekannte thermoplastische Pulverbeschichtungen bestehen beispielsweise aus Polyamiden, Polyolefinen oder Polyvinylchloriden und können über Wirbelsinterprozesse, elektrostatisches Pulverbeschichten, Flammspritzen oder während des Coilcoatings appliziert werden.

Bei einem durch thermoplastische Pulverbeschichtungen gebildeten passiven Korrosionsschutz besteht allerdings das Problem, dass nach einer Beschädigung der Schutzschicht Korrosion ungehindert voranschreiten und die intakte Beschichtung unterwandern kann.

Aus dem Stand der Technik sind auch Verfahren zum aktiven Korrosionsschutz durch Verwendung von Inhibitoren oder Opferanoden bekannt. In der US 2013/048917 A1 wird eine duroplastische Korrosionsschutzbeschichtung beschrieben, welche im Vergleich zum Substrat unedlere Metallpartikel enthält. Zusätzlich wird Kohlenstoff als Füllstoff verwendet, um der Beschichtung leitfähige Eigenschaften zu geben und somit einen Stromfluss zwischen Metallpartikeln und Substrat zu gewährleisten. Durch diese Verbindung ist es möglich, die Korrosion auf die Metallpartikel in der Beschichtung umzuleiten. Das Substrat bleibt weitestgehend unbeschädigt.

Aus der WO 2012/104296 A1 ist zudem die Verwendung von superabsorbierenden Polymeren (SAP) als Zusatz zu Schutzbeschichtungen bekannt, wobei ein superabsorbierendes Polymer als Zusatz zu einem flüssigen und wasserfreien Korrosions- oder Betonschutzbeschichtungsmittel verwendet wird. Der vorteilhafte Effekt der Verwendung von superabsorbierenden Polymeren als Zusatz zu flüssigen Schutzbeschichtungen beruht auf der Erniedrigung der Ionen-Permeabilität der Schutzbeschichtung, die durch Aufquellen der superabsorbierenden Polymere erzielt wird. Die aufgetragene und getrocknete bzw. gehärtete Schutzbeschichtung enthält SAP-Teilchen, die bei Belastung der Beschichtung durch Wasser oder wässrige Elektrolyte aufquellen, ihr Volumen vergrößern und so Poren in der Beschichtung verschließen oder verengen und für Ionen unpassierbar machen, wodurch die schützende Wirkung der Beschichtung verbessert wird.

Aus der WO 01/23479 A1 ist ein gelöstes Beschichtungsmaterial auf der Basis von superabsorbierenden Polyacrylaten und Urethanfilmbildnern zur Beschichtung von Kabeln bekannt.

Die WO 97/08579 A1 offenbart die Beschichtung von optischen Kabeln mit einer wasserabsorbierenden Schicht, wobei erst eine Lösung eines Bindemittels, bevorzugt Latex, aufgebracht und dann eine Pulverbeschichtung mit Acrylsäurepolymerisat erfolgen kann.

Die DE 69915511 T2 betrifft ein flüssiges Beschichtungsmaterial, das ein wasserlösliches und partikuläres superabsorbierendes Polymer (SAP) und ein filmbildendes Bindemittel umfasst.

Aus der US 5,817,713 ist eine gelartige quellfähige Beschichtung bekannt, die aus einem partikulären superabsorbierenden Polymer (SAP) und einem verflüssigten Polyvinylchlorid-Plastisol hergestellt ist.

Die US 2004/0209069 A1 offenbart eine Deckschicht für ein Dekorelement, wobei die Deckschicht durch superabsorbierende Polymere (SAP) einerseits und einen Flüssiglack auf Basis von Polyvinylchlorid andererseits hergestellt ist.

Die WO 2012/104296 A1 betrifft eine flüssige Beschichtungszusammensetzung zur Herstellung einer Korrosionsschicht für ein metallisches Substrat, wobei die Beschichtungszusammensetzung aus einem superabsorbierenden Polymer (SAP) einerseits und einem flüssigen Bindemittel andererseits hergestellt ist.

Von Nachteil bekannter Korrosionsschutzbeschichtungen auf Basis flüssiger Beschichtungsmaterialien, denen superabsorbierende Polymere zugesetzt sind, ist eine geringe Beständigkeit der Beschichtung im Falle von mechanischen Beschädigungen, die beispielsweise auf äußere Einflüsse, wie Verkratzen der Beschichtung, oder auf innere Einflüsse, wie einen hohen Quelldruck der quellfähigen Polymere bei Flüssigkeits- oder Feuchtigkeitskontakt, zurückzuführen sind. Lange Aushärtezeiten der flüssigen Beschichtungsmaterialien und der verfahrenstechnische Aufwand zum Auftragen der Beschichtungsmaterialien sind als weitere Nachteile zu nennen.

Aufgabe der vorliegenden Erfindung ist es, ein Substrat und/oder einen Untergrund mit einem quellfähigen Beschichtungssystem als Schutzbeschichtung, insbesondere als Korrosionsschutzbeschichtung für metallische Substrate, zur Verfügung zu stellen, wobei ein hochwirksamer Korrosionsschutz auch im Falle von mechanischen Beschädigungen der Schutzbeschichtung sichergestellt ist und die Korrosionsschutzdauer gegenüber bekannten Schutzbeschichtungen deutlich verlängert ist. Eine weitere Aufgabe der Erfindung ist es, ein einfaches und kostengünstiges Verfahren zur Herstellung einer über einen langen Zeitraum hochwirksamen Schutzbeschichtung und ein Beschichtungsmaterial für eine solche Schutzbeschichtung bereitzustellen.

Die Erfindung löst diese Aufgaben durch Bereitstellung eines beschichteten Substrats oder Untergrunds, durch ein Verfahren zur Herstellung einer Schutzbeschichtung auf einem Substrat und/oder einem Untergrund und durch ein pulverförmiges Beschichtungsmaterial zur Ausbildung einer Funktionsschicht eines quellfähigen Beschichtungssystems als Schutzbeschichtung gemäß den Ansprüchen 1, 4, und 9.

Das erfindungsgemäße Beschichtungssystem weist wenigstens eine Funktionsschicht auf, wobei die Funktionsschicht wenigstens ein thermoplastisches und/oder thermoplastisch-elastisches Matrixmaterial, wenigstens eine in das Matrixmaterial eingebundene und vorzugsweise statistisch verteilte quellfähige Substanz und, gegebenenfalls, wenigstens einen Hilfs- und/oder Füllstoff aufweist. Die quellfähige Substanz in der Funktionsschicht kann bei einem Flüssigkeits- oder Feuchtekontakt, beispielsweise aufgrund von Rissen oder Kratzern, Poren oder Fehlstellen im Beschichtungssystem, aufquellen und so die beschädigte Stelle automatisch abdichten. Der direkte Kontakt zwischen Substrat und Flüssigkeit/Sauerstoff wird durch das automatische Verschließen von Beschädigungen auf ein Minimum reduziert. Hierdurch werden sowohl der Sauerstoffkontakt und der Ionenaustausch als auch eine Unterwanderung der Beschichtung und somit das Fortschreiten der Korrosion gehemmt. Die Wasseraufnahmerate der quellfähigen Substanz und dadurch die Abdichtungsgeschwindigkeit der Beschichtung sind erfindungsgemäß durch Auswahl einer geeigneten quellfähigen Substanz und/oder Festlegung der Menge der quellfähigen Substanz in der Funktionsschicht einstellbar und damit an die jeweilige Anwendung und das eingesetzte Matrixmaterial anpassbar. Durch den Einsatz von Matrixmaterialien mit hoher Elastizität lassen sich mögliche Beschädigungen der Funktionsschicht, die auf den Quelldruck der quellfähigen Partikel zurückzuführen sind, wirkungsvoll verhindern oder zumindest verringern.

Die Verbesserungen und Vorteile des erfindungsgemäßen Beschichtungssystems liegen insbesondere in der Fähigkeit zur Selbstabdichtung, wobei der Einsatz reaktiver Substanzen und/oder von Lösungsmitteln in der Funktionsschicht nicht erforderlich sein muss. Dadurch ist das Beschichtungssystem sowohl in der Verarbeitung als auch in der Nutzungsphase umweltfreundlicher und nachhaltiger als andere bekannte Beschichtungssysteme. Der Einsatz des erfindungsgemäßen Beschichtungssystems führt zu verlängerten Wartungsintervallen, was einerseits die Belastung für die Umwelt, andererseits die Kosten für die Instandhaltung senkt.

Das erfindungsgemäße Verfahren zur Herstellung einer Schutzbeschichtung auf einem Substrat und/oder einem Untergrund sieht dementsprechend vor, dass ein pulverförmiges Beschichtungsmaterial aus wenigstens einem thermoplastischen und/oder thermoplastisch-elastischen Matrixmaterial, wenigstens einer quellfähigen Substanz und, gegebenenfalls, wenigstens einem Hilfs- und/oder Füllstoff hergestellt und in wenigstens einem Beschichtungsschritt auf das Substrat oder den Untergrund aufgebracht wird, um wenigstens eine Funktionsschicht eines quellfähigen Beschichtungssystems auszubilden. Das Beschichtungsmaterial kann mit an sich bekannten Methoden zur Pulverbeschichtung appliziert werden. Bei Partikelgrößen von beispielsweise weniger als 140 $\mu$m kann das Beschichtungsmaterial durch elektrostatische Pulverbeschichtungsverfahren aufgebracht werden. Bei größeren Partikelgrößen von bis zu 300 $\mu$m lässt sich das Beschichtungsmaterial vorteilhaft durch Wirbelsintern aufbringen. Das Beschichtungsmaterial kann auch mittels Flammspritzen aufgebracht werden. Eine Rückgewinnung der zur Ausbildung der Funktionsschicht eingesetzten Beschichtungspulver ist möglich, was zu einer höheren Umweltfreundlichkeit und Nachhaltigkeit des erfindungsgemäßen Beschichtungssystems gegenüber Flüssiglacksystemen führt.

Um ein ausreichend hohes Selbstabdichtungsvermögen und damit eine lang andauernde Korrosionsschutzwirkung zu erzielen, kann der Quellgrad Q der Funktionsschicht zwischen 100 % und 800 %, vorzugsweise zwischen 200 % und 500 %, insbesondere zwischen 250 % bis 400 %, betragen. Der Quellgrad Q genügt der nachfolgend angegebenen allgemeinen Beziehung (I):

$$Q = \frac{Gewicht\ (Funktionsschicht, gequollen)}{Gewicht\ (Funktionsschicht, trocken)} \quad x\ 100\ [\%] \qquad (I)$$

Hierbei bezeichnet "Gewicht($_{Funktionsschicht,\ gequollen}$)" das Gewicht der Funktionsschicht bei Erreichen der maximalen Wasseraufnahme bei Einlagerung der Funktionsschicht in vollentsalztes Wasser (VE-Wasser). "Gewicht($_{Funktionsschicht,\ trocken}$)" bezeichnet das Trockengewicht der Funktionsschicht vor einem Wasser- und/oder Feuchtekontakt.

Das eingesetzte Matrixmaterial kann ebenfalls ein bestimmtes Quellungsvermögen aufweisen und in polaren Flüssigkeiten aufquellen, wobei der Quellgrad des Matrixmaterials deutlich unter dem Quellgrad der quellfähigen Substanz liegt. Das Quellungsvermögen des Matrixmaterials unterstützt die Fähigkeit des erfindungsgemäßen Beschichtungssystems zur Selbstabdichtung und trägt zu einer verbesserten Korrosionshemmung bei. Der Quellgrad des Matrixmaterials kann insbesondere im Bereich zwischen 100 % und 300 %, weiter insbesondere zwischen 100 % und 200 %, liegen.

Das Matrixmaterial der Funktionsschicht kann ausgewählt sein aus der Gruppe der Thermoplasten, insbesondere der Polyamide, der Polyester, der Polyolefine oder der Polyacetale, und/oder deren Copolymeren. Das Matrixmaterial kann auch ausgewählt sein aus der Gruppe der thermoplastischen Elastomere, insbesondere aus der Gruppe der thermoplastischen Copolyamide (TPE-A oder TPA), der thermoplastischen Elastomere auf Olefinbasis (TPE-O oder TPO), vorwiegend PP/EPDM, und/oder aus der Gruppe der vernetzten thermoplastischen Elastomere auf Olefinbasis (TPE-V oder TPV), vorwiegend PP/EPDM, und/oder aus der Gruppe der thermoplastischen Elastomere auf Urethanbasis (TPE-U oder TPU) und/oder aus der Gruppe der thermoplastischen Polyesterelastomere / thermoplastischen Copolyester (TPE-E oder TPC), und/oder aus der Gruppe der Styrol-Blockcopolymere (TPE-S oder TPS), vorwiegend SBS, SEBS, SEPS, SEEPS und MBS, und/oder deren Copolymeren.

Die als Pulver eingesetzten polymeren Matrixmaterialien können beispielsweise über Fällungs- und Verdüsungsprozesse sowie kryogene Mahlung hergestellt sein. Insgesamt sollte der Anteil an Pulverpartikeln mit einer Größe von mehr als 150 mm oder weniger als 10 $\mu$m möglichst gering sein oder, vorzugsweise, es sollten Pulverpartikel mit einer Größe von mehr als 150 mm oder kleiner als 10 $\mu$m nicht vorhanden sein. Besonders bevorzugt sollte die Hauptfraktion der Partikel, d.h. ein Anteil zwischen 50 Vol.-% und 80 Vol.-%, in einem Größenbereich zwischen 50 $\mu$m und 110 $\mu$m, insbesondere mit einem Peak bei 70 $\mu$m bis 90 $\mu$m, weiter insbesondere bei ca. 80 $\mu$m, liegen.

Als quellfähige Substanzen eignen sich natürliche und/oder synthetische Polymere und/oder mineralische Substanzen. Als natürliche Substanzen können beispielsweise Polysaccharide, ausgewählt aus Alginaten, Alginsäuren, Amylose, Amylopektin, Callose, Carragenan, Cellulose, Chitin, Dextran, Guluronsäure, Inolin, Laminarin, Lichenin, Pullulan, Pustulan, Stärke, Stärkederivaten, Xanthan oder Mischungen derselben, eingesetzt werden. Als synthetische Polymere können beispielsweise Materialien aus hoch saugaktivem synthetischen Polymer, ausgewählt aus Polymeren auf (Meth-)acrylatbasis, Poly(meth)acrylsäure und deren Salzen, Polyacrylamid, Polyalkoholen und Copolymeren der genannten synthetischen Polymere, und ggf. unter Zusatz von Vernetzungs- und Verarbeitungshilfsmitteln und/oder Eigenschaftsverbesserern, eingesetzt werden. Als mineralische Substanzen können beispielsweise Tone, wie Betonit oder Kalonit, verwendet werden. Besonders bevorzugt wird als quellfähige Substanz ein superabsorbierendes Polymer (SAP) eingesetzt.

Vorzugsweise kann die quellfähige Substanz in einem Beschichtungsmaterial zur Ausbildung der Funktionsschicht pulverförmig vorliegen, wobei, weiter vorzugsweise, die Korngröße der quellfähigen Substanz, bezogen auf eine Hauptfraktion der Partikel von 50 Vol.-% bis 80 Vol.-%, zwischen 5 $\mu$m und 100 $\mu$m, besonders bevorzugt zwischen 10 $\mu$m und 80 $\mu$m, betragen kann. Je feiner das verwendete Matrixmaterial ist, desto feiner sollte auch die eingesetzte quellfähige Substanz sein. Weiter vorzugsweise ist es so, dass die Korngröße der quellfähigen Substanz, bezogen auf eine Hauptfraktion der Partikel zwischen 50 Vol.-% und 80 Vol.-%, um wenigstens 10 $\mu$m kleiner ist als die Korngröße des Matrixmaterials. Durch die gewählten Korngrößen ist eine gleichmäßige Verteilung der quellfähigen Substanz in dem Matrixmaterial möglich und es wird ein hohes Quellungsvermögen der Funktionsschicht gewährleistet.

Besonders bevorzugt ist der Einsatz von thermoplastischen Elastomeren auf Urethanbasis (TPU) als Matrixmaterial. Als quellfähige Substanzen eignen sich in diesem Zusammenhang insbesondere superabsorbierende Polymere (SAP), nämlich Copolymere auf Basis von Acrylsäure und Natriumacrylat.

Als Hilfs- und/oder Füllstoffe können Additive eingesetzt werden, die einen UV-Schutz des Beschichtungssystems gewährleisten oder die Haftung zum Substrat und/oder zum Untergrund oder zwischen dem Matrixmaterial und der quellfähigen Substanz verbessern. Auch Additive für eine erhöhte Kälteschlagfestigkeit sowie Flammschutz oder Oxidationsinhibitoren können als Hilfs- und Füllstoffe eingesetzt werden.

In Abhängigkeit von der Elastizität des Matrixmaterials und dem angestrebten Quellverhalten des Beschichtungssystems kann sich die Menge der einzelnen Komponenten des Beschichtungssystems ändern. Der Anteil des Matrixmaterials in der Funktionsschicht kann zwischen 30 und 99 Gew.-% betragen, vorzugsweise wenigstens 50 Gew.-%. Der Anteil der quellfähigen Substanz in der Funktionsschicht kann zwischen 1 und 50 Gew.-%, vorzugsweise zwischen 5 und 40 Gew.-%, weiter vorzugsweise zwischen 20 und 30 Gew.-%, betragen. Der Anteil eines Hilfs- und/oder Füllstoffs in der Funktionsschicht kann zwischen 0,01 und 20 Gew.-% betragen.

Das Matrixmaterial kann eine Härte im Bereich von 50 Shore A bis 75 Shore D, vorzugsweise im Bereich von 30 Shore D bis 50 Shore D, weiter vorzugsweise von ca. 40 Shore D, aufweisen. Bei geringerer Härte neigen die Pulver zum Kompaktieren und Verkleben, weshalb eine größere Menge Hilfsstoffe eingesetzt werden muss, was von Nachteil ist. Härtere Materialien können sich beim Quellvorgang "nicht bewegen" und sind somit auch nur bedingt geeignet. Alle vorgenannten und nachfolgenden Härteangaben beziehen sich auf eine Härtemessung gemäß DIN 53505.

Die Schichtdicke der Funktionsschicht beträgt vorzugsweise zwischen 30 $\mu$m und 400 $\mu$m, weiter vorzugsweise zwischen 50 $\mu$m und 300 $\mu$m, besonders bevorzugt zwischen 60 $\mu$m und 120 $\mu$m, insbesondere zwischen 70 $\mu$m und 100 $\mu$m. Die Schichtdicke ist insbesondere kleiner als 200 $\mu$m, weiter insbesondere kleiner als 150 $\mu$m, und kann auch kleiner als 120 $\mu$m sein.

Weiter vorzugsweise weist das Beschichtungssystem wenigstens eine mit der Funktionsschicht verbundene Haftschicht zur Verbesserung der Haftung des Beschichtungssystems auf einem Substrat und/oder an einem Untergrund auf. Bei der Haftschicht handelt es sich um eine Grundierung, die eine optimale Haftung des Beschichtungssystems gewährleisten soll. Die Haftschicht kann vor dem Aufbringen eines Beschichtungsmaterials, das nachfolgend die Funktionsschicht ausbildet, als erste Schicht des Beschichtungssystems auf ein Substrat und/oder einen Untergrund aufgebracht werden. Als Materialien für die Grundierung können pulverförmige Duroplaste, beispielsweise Epoxydharze, Polyesterharze, Polyurethane, Polyacrylate sowie Hybridlacke aus den genannten Systemen, pulverförmige Thermoplaste, beispielsweise Polyamide, Polyester, Polypropylen, Polyethylen, Polyacetale und thermoplastische Elastomere eingesetzt werden. Auch der Einsatz flüssiger Beschichtungssysteme ist möglich.

Um das Anhaften des Beschichtungssystems an dem Substrat und/oder an einem Untergrund zu verbessern, ist auch eine Vorbehandlung des Substrates und/oder des Untergrundes vor dem Auftragen der Funktionsschicht und/oder der Haftschicht möglich, wobei das Substrat und/oder der Untergrund entfettet und/oder mechanisch aufgeraut werden kann. Die Haftschicht kann durch ein Pulverbeschichtungsverfahren, beispielsweise durch Flammspritzen, Wirbelsintern oder elektrostatisches Pulversprühen, auf das Substrat und/oder den Untergrund aufgebracht sein. Die Schichtdicke der Haftschicht kann zwischen 10 $\mu$m und 100 $\mu$m, vorzugsweise zwischen 15 $\mu$m und 80 $\mu$m, liegen. Bei flüssigen Grundierungen sind auch Schichtdicken von weniger als 50 $\mu$m, vorzugsweise von ca. 10 $\mu$m, möglich. Auch eine Plasma-/Koronabehandlung des Substrats oder das Verzinken des Substrats ist vor dem Aufbringen eines Beschichtungsmaterials, das die Funktionsschicht ausbildet, möglich und von Vorteil. Eine Plasma-/Koronabehandlung des Substrats kann es ermöglichen, die Funktionsschicht direkt auf das Substrat aufzutragen, ohne das Substrat zuvor zu grundieren. Dies trägt zu einer Verfahrensvereinfachung bei der Ausbildung der Schutzbeschichtung bei.

Bei einer weiter vorteilhaften Ausgestaltung des erfindungsgemäßen Beschichtungssystems kann wenigstens eine auf die Funktionsschicht aufgebrachte Deckschicht vorgesehen sein. Die Deckschicht wird nach dem Aufbringen des Beschichtungsmaterials für die Funktionsschicht und, vorzugsweise, nach der Ausbildung der Funktionsschicht, als weitere Schicht des Beschichtungssystems aufgebracht. Durch Verwendung eines Deckschichtmaterials mit einer ausreichend hohen Elastizität können mechanische Beschädigungen bei geringer Krafteinwirkung auf das Beschichtungssystem verhindert oder verringert werden, wobei die Deckschicht bei leichtem Druck nicht zerstört wird, sondern sich zunächst reversibel verformt.

Die Deckschicht können Thermoplaste, beispielsweise Polyamide, Polyester, Polypropylene, Polyethylene oder Polyacetale oder Duroplaste bilden. Das Deckschichtmaterial kann auch ausgewählt sein aus der Gruppe der thermoplastischen Elastomere, insbesondere aus der Gruppe der thermoplastischen Copolyamide (TPE-A oder TPA), der thermoplastischen Elastomere auf Olefinbasis (TPE-O oder TPO), vorwiegend PP/EPDM, und/oder aus der Gruppe der vernetzten thermoplastischen Elastomere auf Olefinbasis (TPE-V oder TPV), vorwiegend PP/EPDM, und/oder aus der Gruppe der thermoplastischen Elastomere auf Urethanbasis (TPE-U oder TPU) und/oder aus der Gruppe der thermoplastischen Polyesterelastomere / thermoplastischen Copolyester (TPE-E oder TPC), und/oder aus der Gruppe der Styrol-Blockcopolymere (TPE-S oder TPS), vorwiegend SBS, SEBS, SEPS, SEEPS und MBS, und/oder aus deren Copolymeren. Bei einer weiter bevorzugten Ausführungsform entspricht das Deckschichtmaterial dem Matrixmaterial der Funktionsschicht. Vorzugsweise wird ein pulverförmiges Einsatzmaterial für die Deckschicht verarbeitet, was den Einsatz von bekannten Pulverbeschichtungsverfahren zulässt. Die Schichtdicke der Deckschicht kann der Dicke der Funktionsschicht entsprechen. In Abhängigkeit von dem eingesetzten Deckschichtmaterial kann die Dicke der Deckschicht auch kleiner sein als die Dicke der Funktionsschicht.

Die Deckschicht kann sowohl funktionale als auch dekorative Eigenschaften aufweisen. Die Deckschicht kann eine abdichtende Funktion übernehmen, so dass die quellfähigen Substanzen in der Funktionsschicht bei einer intakten Beschichtung nicht direkt mit Wasser in Kontakt kommen können. Zum anderen kann die Deckschicht haptische oder dekorative Funktionen übernehmen, indem z.B. Strukturen aufgebracht werden oder Pigmente oder andere haptisch oder optisch wirkende Additive zugesetzt werden.

Die Partikelgrößen des Deckschichtmaterials sollten vorzugsweise den Partikelgrößen des eingesetzten Matrixmaterials entsprechen, können jedoch auch von diesen abweichen.

Die Ausbildung der Funktionsschicht auf einem Substrat und/oder einem Untergrund erfolgt vorzugsweise durch Applikation eines pulverförmigen Beschichtungsmaterials. Das Auftragen des Beschichtungsmaterials kann über aus dem Stand der Technik bekannte Pulverbeschichtungsverfahren erfolgen, beispielsweise über elektrostatisches Pulversprühen, Flammspritzen oder Wirbelsintern. Mit den bekannten Pulverbeschichtungsverfahren ist ein gleichmäßiger Auftrag des Beschichtungsmaterials in einfacher Weise und kostengünstig möglich.

Das Beschichtungsmaterial kann beispielsweise als Dry Blend vorliegen und durch Trockenmischen eines pulverförmigen Matrixmaterials mit einer vorzugsweise pulverförmigen quellfähigen Substanz, und, gegebenenfalls, mit wenigstens einem vorzugsweise pulverförmigen Hilfs- und/oder Füllstoff erhalten werden.

Alternativ ist es möglich und vorteilhaft, wenn das Beschichtungsmaterial durch Synthetisierung eines Matrixmaterials in Gegenwart von einer quellfähigen Substanz und, gegebenenfalls, in Gegenwart von wenigstens einem Hilfs- und/oder Füllstoff hergestellt wird. Hierbei können Monomere und Oligomere des Matrixmaterials in Gegenwart der quellfähigen Substanz sowie ggf. weiterer Hilfs- und Füllstoffe polymerisiert werden. Das synthetisierte Matrixmaterial kann anschließend in Lösung gefällt, verdüst oder vermahlen werden.

Bei einer weiteren alternativen Ausführungsform des erfindungsgemäßen Verfahrens kann das Beschichtungsmaterial durch Schmelzemischen eines Matrixmaterials, beispielsweise durch Compoundierung im Doppelschneckenextruder, in Gegenwart von einer quellfähigen Substanz, und, gegebenenfalls, in Gegenwart von wenigstens einem Hilfs- und/oder Füllstoff, erhalten werden. Auch hier kann vorgesehen sein, die erstarrte Mischung anschließend zu vermahlen.

Die Korngröße des pulverförmigen Beschichtungsmaterials kann, bezogen auf eine Hauptfraktion der Partikel von 50 Vol.-% bis 80 Vol.-%, im Bereich zwischen 10 μm und 300 μm, vorzugsweise im Bereich zwischen 50 μm und 150 μm, weiter vorzugsweise im Bereich zwischen 50 μm und 110 μm, mit einem Peak zwischen 60 μm und 100 μm, insbesondere bei ca. 80 μm, liegen, um eine einfache Weiterverarbeitung zu gewährleisten.

Ein Beschichtungspulver für die Funktionsschicht kann entsprechend der verwendeten Beschichtungsmethode klassiert und in wenigstens einem Beschichtungsschritt appliziert werden. Je nach verwendeten Materialien und Schichtaufbauten kann es aber auch sinnvoll sein, die einzelnen Schichten einer thermischen Behandlung, beispielsweise im Ofen, zu unterziehen. Eine auf das Substrat und/oder einen Untergrund aufgebrachte Schicht kann zur Ausbildung eines geschlossenen Films thermisch behandelt werden, wobei erst nach der Filmbildung eine weitere Schicht aufgebracht wird. Dies kann sich vorteilhaft auf die mechanischen Eigenschaften und/oder die Korrosionsschutzeigenschaften des erfindungsgemäßen Beschichtungssystems auswirken.

Ausführungsbeispiele

Das Quellungsverhalten der Funktionsschicht sowie der in der Funktionsschicht eingesetzten quellfähigen Substanz wurde durch Einlagerung in vollentsalztes Wasser (VE-Wasser) untersucht. Für die Funktionsschicht wurde jeweils der Quellgrad im Gleichgewicht, d.h. bei maximaler Wasseraufnahme, ermittelt. Für die quellfähige Substanz wurde der Quellgrad bei freier Quellung in einem Aufnahmebeutel nach 60 Minuten bestimmt.

Die nachfolgend genannten Werte für die Partikelgrößenverteilung wurden mittels Laserbeugung bei Verwendung eines Messgerätes mit der Bezeichnung "Mastersizer 2000" der Firma Malvern bestimmt. Die Messungen mit SAP erfolgten dispergiert in Ethanol, während die Messungen im Übrigen in VE-Wasser erfolgten.

Beispiel 1

Es wurden Prüfplatten Q-Panel R46 der Firma Q-Lab beschichtet. Bei den Prüfplatten handelt es sich um genormte Prüfbleche aus Stahl mit folgenden Spezifikationen:

| | |
|---|---|
| Dicke: | 0,81 mm |
| Oberfläche: | matt |
| CRS SAE Materialbezeichnung: | 1008/1010 |
| ASTM Materialspezifikation: | A 1008 |
| ISO Materialspezifikation: | 3574 Typ CR1 |
| ASTM Plattenspezifikation: | D609-Typ 1 |
| ISO Plattenspezifikation: | 1514-Typ 1 |
| Rauheit Ra: | 0,635 bis 1,651 μm |
| Härte (Rockwell): | B50 bis B65 |
| Chemische Zusammensetzung: | Mangan ≤ 60 Gew.-%, |
| | Kohlenstoff ≤ 15 Gew.-%, |
| | Phosphor ≤ 0,03 Gew.-%, |
| | Schwefel ≤ 0,035 Gew.-% |

Als Grundierung wurde eine Epoxidharz-basierte Pulverbeschichtung (EP) der Firma BASF (Typ 530076992250) auf die Prüfplatten aufgebracht. Als Beschichtungsmaterial zur Ausbildung einer Funktionsschicht wurde aus Vestosint 2161 (PA 12/Evonik, 75 Shore D, $d_{10}$ = 4 μm, $d_{50}$ = 26 μm, $d_{90}$ = 48 μm) und 50 Gew.-% SAP (vernetztes Acrylamid/Acrylsäure-Copolymer, Quellgrad 7400% in VE-Wasser, Partikelgrößenverteilung im Wesentlichen entsprechend SAP aus Beispiel 2), ein Dry Blend hergestellt. Dieser wurde mittels elektrostatischen Pulversprühens auf die Prüfplatten appliziert, die Filmbildung fand in einem Ofen bei 200 °C für insgesamt 10 min statt. Die Gesamtschichtdicke des erhaltenen Schichtsystems betrug 132 μm. Die Schichtdicke der Grundierung betrug 65 μm, während die Schichtdicke der Funktionsschicht 67 μm betrug.

Dieser Aufbau zeigte nach DIN EN ISO 2409 einen Gitterschnitt-Kennwert von 0. Die Korrosionsbeständigkeit wurde im Tauchversuch in einer NaCl-Lösung (50 g NaCl/l VE-H$_2$O) geprüft. Hierfür wurden die Prüfplatten entsprechend DIN EN ISO 17872 beschädigt (T-Form, Ritzwerkzeug a). Nach 24 h war keine Unterwanderung der Beschichtung zu erkennen, lediglich in der Beschädigung hatte sich Rost gebildet.

Beispiel 2

Es wurden Prüfplatten Q-Panel R64 (Q-Lab) beschichtet. Als Grundierung wurde ein Hybridlack auf Basis von Epoxidharz und ungesättigtem Polyester (EP/UP) der Firma Axalta (Typ AlestaEP) aufgebracht. Als Beschichtungsmaterial zur Ausbildung einer Funktionsschicht wurde aus Pebax 55R53 (TPA/Arkema, 51 Shore D, d$_{10}$ = 34 $\mu$m, d$_{50}$ = 77 $\mu$m, d$_{90}$ = 147 $\mu$m) und 20 Gew.-% SAP (vernetztes Acrylamid/Acrlysäure-Copolymer, Quellgrad 23800 % in VE-Wasser, d$_{10}$ = 13 $\mu$m, d$_{50}$ = 41 $\mu$m, d$_{90}$ = 80 $\mu$m) ein Compound mittels Doppelschneckenextruder hergestellt und im Anschluss kryogen vermahlen. Das Pulver wurde getrocknet und mittels elektrostatischen Pulversprühens appliziert, die Filmbildung fand in einem Ofen bei 190 °C für 1 min statt. Der Quellgrad der Funktionsschicht betrug 145 %. Für die Deckschicht wurde ebenfalls Pebax 55R53 (TPA/Arkema, 51 Shore D, d$_{10}$ = 34 $\mu$m, d$_{50}$ = 77 $\mu$m, d$_{90}$ = 147 $\mu$m) verwendet und mittels elektrostatischen Pulversprühens appliziert. Die Filmbildung fand in einem Ofen bei 190 °C für 3 min statt. Die Gesamtschichtdicke betrug 288 $\mu$m. Die Schichtdicke der Grundierung betrug 67 $\mu$m, der Funktionsschicht 119 $\mu$m und der Deckschicht 191 $\mu$m.

Dieser Aufbau zeigte nach DIN EN ISO 2409 einen Kreuzschnitt-Kennwert von 0. Die Korrosionsbeständigkeit wurde im Tauchversuch in einer NaCl-Lösung (50 g NaCl/l VE-H$_2$O) geprüft. Hierfür wurden die Prüfplatten entsprechend DIN EN ISO 17872 beschädigt (T-Form, Ritzwerkzeug a). Nach 168 h war keine Unterwanderung der Beschichtung zu erkennen, es war keine Rostbildung auf dem Substrat zu erkennen. Des Weiteren fand eine Rissabdichtung durch Quellung statt.

Beispiel 3

Es wurden Prüfplatten Q-Panel R46 (Q-Lab) beschichtet. Als Grundierung wurde ein Hybridlack auf Basis von Epoxidharz und ungesättigtem Polyester (EP/UP) der Firma Axalta (Typ AlestaEP) aufgebracht. Als Beschichtungsmaterial zur Ausbildung einer Funktionsschicht wurde aus Desmopan 2786A (TPU/Bayer, 38 Shore D/84 Shore A, d$_{10}$ = 60 $\mu$m, d$_{50}$ = 96 $\mu$m, d$_{90}$ = 155 $\mu$m) und 40 Gew.-% SAP (vernetztes Acrylamid/Acrylsäure-Copolymer, Quellgrad 7400 % in VE-Wasser, Partikelgrößenverteilung im Wesentlichen entsprechend SAP aus Beispiel 2) ein Dry Blend hergestellt und mittels elektrostatischen Pulversprühens appliziert. Die Filmbildung fand in einem Ofen bei 220 °C für 2 min statt. Der Quellgrad der Funktionsschicht betrug 294 %. Für die Deckschicht wurde ebenfalls Desmopan 2786A (TPU/Bayer, 38 Shore D/84 Shore A, d$_{10}$ = 60 $\mu$m, d$_{50}$ = 96 $\mu$m, d$_{90}$ = 155 $\mu$m) verwendet und nach Ausbildung der Funktionsschicht mittels elektrostatischen Pulversprühens appliziert. Die Filmbildung fand in einem Ofen bei 220 °C für 5 min statt. Die Gesamtschichtdicke betrug 295 $\mu$m. Die Schichtdicke der Grundierung betrug 67 $\mu$m, der Funktionsschicht 123 $\mu$m und der Deckschicht 105 $\mu$m.

Dieser Aufbau zeigt nach DIN EN ISO 2409 einen Kreuzschnitt-Kennwert von 0. Die Korrosionsbeständigkeit wurde im Tauchversuch in einer NaCl-Lösung (50 g NaCl/l VE-H$_2$O) geprüft. Hierfür wurden die Prüfplatten entsprechend DIN EN ISO 17872 beschädigt (T-Form, Ritzwerkzeug a). Nach 168 h war keine Unterwanderung der Beschichtung zu erkennen, es war keine Rostbildung auf dem Substrat zu erkennen. Des Weiteren fand eine Rissabdichtung durch Quellung statt.

Weitere Vorteile, Merkmale, Eigenschaften und Aspekte der vorliegenden Erfindung ergeben sich aus der folgenden Beschreibung bevorzugter Ausführungsformen der Erfindung anhand der Zeichnung. Es zeigen:

Fig. 1     eine schematische Darstellung des Funktionsprinzips eines erfindungsgemäßen Beschichtungssystems,

Fig. 2     eine schematische Darstellung des Schichtaufbaus bei einer ersten Ausführungsform des erfindungsgemäßen Beschichtungssystems,

Fig. 3     eine schematische Darstellung des Schichtaufbaus bei einer zweiten Ausführungsform des erfindungsgemäßen Beschichtungssystems,

Fig. 4     eine schematische Darstellung des Schichtaufbaus bei einer dritten Ausführungsform des erfindungsgemäßen Beschichtungssystems,

Fig.5     eine schematische Darstellung des Schichtaufbaus bei einer vierten Ausführungsform des erfindungsgemäßen Beschichtungssystems,

Fig. 6     eine photographische Darstellung einer Prüfplatte nach Korrosionstests, wobei die Prüfplatte ein erfindungsgemäßes Beschichtungssystem als Schutzbeschichtung aufweist, und

Fig. 7     eine photographische Darstellung einer Prüfplatte nach Korrosionstests, wobei die Prüfplatte eine aus dem Stand der Technik bekannte nicht-quellfähige Schutzbeschichtung aufweist.

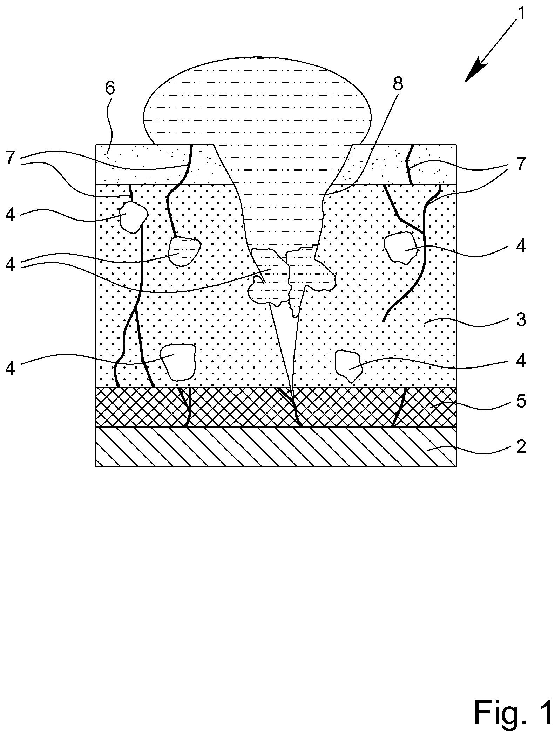

Fig. 1 zeigt schematisch das Prinzip der automatischen Abdichtung bei Verwendung eines quellfähigen Beschichtungssystems 1 als Korrosionsschutzbeschichtung für ein metallisches Substrat 2. Das Beschichtungssystem 1 weist einen Beschichtungsaufbau auf, der aus wenigstens einer Funktionsschicht 3 besteht, in der eine quellfähige Substanz 4 eingebettet ist. Die quellfähige Substanz 4 liegt partikelförmig in der Funktionsschicht 3 vor. Zusätzlich kann eine Haftschicht 5 vorgesehen sein, um die Haftung auf dem Substrat 2 zu erhöhen. Den Abschluss nach außen kann eine Deckschicht 6 bilden, die funktionale und/oder dekorative Eigenschaften aufweisen kann.

Kommt es über Poren 7 in der Deckschicht 6 und der Funktionsschicht 3 oder über einen Kratzer 8 in der Deckschicht 6, der sich bis zur Funktionsschicht 3 oder in die Funktionsschicht 3 hinein erstreckt, zu einem Wassereintritt in die Funktionsschicht 3, quillt die Funktionsschicht 3 bei Flüssigkeits- oder Feuchtigkeitskontakt der quellfähigen Substanz 4 auf, so dass die beschädigte Stelle der Funktionsschicht 3 automatisch abgedichtet wird. Dies ist in Fig. 1 beispielhaft für den Wassereintritt über eine Pore 7 und einen Kratzer 8 in die Funktionsschicht 3 gezeigt, wobei die im Bereich der Pore 7 und des Kratzers 8 vorhandenen quellfähigen Partikel aufquellen und zu einem automatischen Verschließen der Pore 7 bzw. des Kratzers 8 führen. Der direkte Kontakt zwischen dem Substrat 2 und Flüssigkeit/Sauerstoff wird damit auf ein Minimum reduziert oder völlig ausgeschlossen. Sowohl der Sauerstoffkontakt und Ionenaustausch als auch eine Unterwanderung der Beschichtung und somit das Fortschreiten der Korrosion des Substrats 2 werden damit gehemmt oder verhindert.

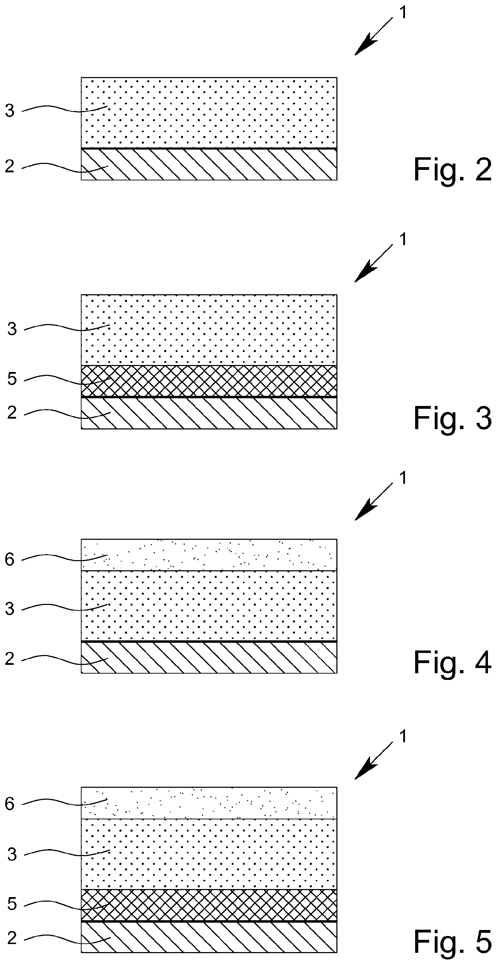

Gemäß Fig. 2 kann die Funktionsschicht 3 unmittelbar durch ein Pulverbeschichtungsverfahren auf das Substrat 2 aufgebracht sein.

Gemäß Fig. 3 kann die Funktionsschicht 3 über eine Haftschicht 5 mit dem Substrat 2 verbunden sein, wobei die Haftschicht 5 die Haftung zwischen der Funktionsschicht 3 und dem Substrat 2 verstärkt. Die Funktionsschicht 3 und die Haftschicht 5 können mit einem Pulverbeschichtungsverfahren aufgebracht sein.

Abhängig von den an das Beschichtungssystem 1 gestellten Anforderungen kann auf die Funktionsschicht 3 eine Deckschicht 6 aufgebracht werden. Dies ist in Fig. 4 gezeigt. Die Deckschicht 6 kann eine abdichtende Funktion übernehmen, so dass die quellfähige Substanz 4 in der Funktionsschicht 3 bei intakter Beschichtung nicht mit Wasser in Kontakt kommt. Zum anderen kann die Deckschicht 6 haptische oder dekorative Funktionen übernehmen. Alle Schichten 3, 6 können mit einem Pulverbeschichtungsverfahren aufgebracht sein.

Gemäß Fig. 5 kann das Beschichtungssystem 1 auch einen dreischichtigen oder auch mehr als dreischichtigen Aufbau mit wenigstens einer Funktionsschicht 3 aufweisen, die über wenigstens eine Haftschicht 5 mit dem Substrat 2 verbunden ist. Auf die Funktionsschicht 3 kann wenigstens eine Deckschicht 6 aufgebracht sein. Alle Schichten 3, 6 können mit einem Pulverbeschichtungsverfahren aufgebracht sein.

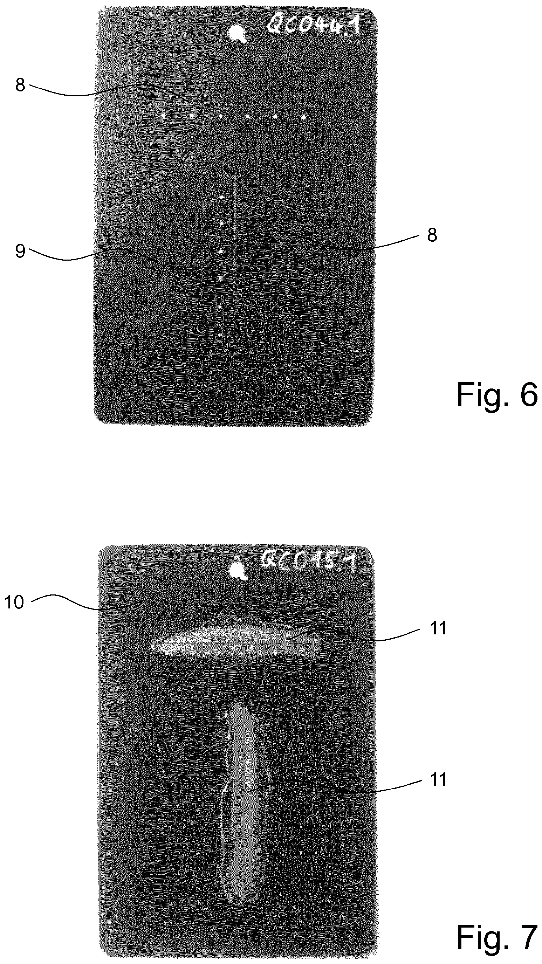

Die Figuren 6 und 7 zeigen photographische Darstellungen von Prüfplatten 9, 10 nach erfolgten Korrosionstests. Die Prüfplatten 9, 10 entsprechen den im Ausführungsbeispiel 3 eingesetzten Prüfplatten. Die Prüfplatte 9 aus Fig. 6 wurde mit einem quellfähigen Beschichtungssystem gemäß Ausführungsbeispiel 3 beschichtet. Die Prüfplatte 10 aus Fig. 7 wurde mit einem nicht-quellfähigen thermoplastischen Beschichtungsmaterial beschichtet.

Die Korrosionsbeständigkeit wurde im Tauchversuch mit einer NaCl-Lösung (50 g NaCl/l VE-$H_2O$) geprüft. Hierfür wurden die Prüfplatten 9, 10 entsprechend DIN EN ISO 17872 beschädigt (T-Form, Ritzwerkzeug a). Nach 168 Stunden Tauchversuch zeigte die Prüfplatte 9 aus Fig. 6 keine Unterwanderung der Beschichtung. Es war keine Rostbildung auf der Prüfplatte 9 zu erkennen. Des Weiteren fand eine Rissabdichtung durch Quellung statt. Die Prüfplatte 10 aus Fig. 7 zeigte eine deutliche Unterwanderung der Beschichtung mit starker Rostbildung 11 auf dem Substrat.

## Patentansprüche

1.    Metallisches Substrat (2) und/oder metallischer Untergrund mit einem quellfähigen Beschichtungssystem (1) als Schutzbeschichtung, wobei das Beschichtungssystem (1) wenigstens eine Funktionsschicht (3) aufweist, wobei die Funktionsschicht (3) erhalten ist durch Applikation eines pulverförmigen Beschichtungsmaterials auf dem Substrat (2) und/oder dem Untergrund, wobei das Beschichtungsmaterial wenigstens ein thermoplastisches oder thermoplastisch-elastisches Matrixmaterial und wenigstens eine quellfähige Substanz (4) beinhaltet und wobei die quellfähige Substanz (4) in der Funktionsschicht (3) in das Matrixmaterial eingebunden ist.

2.    Substrat (2) und/oder Untergrund nach Anspruch 1, **dadurch gekennzeichnet, dass** der Quellgrad der Funktionsschicht (3), bezogen auf die Gewichtszunahme der Funktionsschicht (3) bei Einlagerung der Funktionsschicht (3) in vollentsalztes Wasser und Erreichen der maximalen Wasseraufnahme, zwischen 100 % und 800 % liegt.

3. Substrat (2) und/oder Untergrund nach Anspruch 1 oder 2, **dadurch gekennzeichnet, dass** der Anteil der quellfähigen Substanz (4) in der Funktionsschicht (3) zwischen 1 Gew.-% und 50 Gew.-% beträgt.

4. Verfahren zur Herstellung einer Schutzbeschichtung auf einem metallischen Substrat (2) und/oder metallischen Untergrund, wobei ein pulverförmiges Beschichtungsmaterial beinhaltend wenigstens ein thermoplastisches oder thermoplastisch-elastisches Matrixmaterial und wenigstens eine quellfähige Substanz (4) in wenigstens einem Beschichtungsschritt auf das Substrat (2) aufgebracht wird, um wenigstens eine Funktionsschicht (3) eines quellfähigen Beschichtungssystems (1) nach einem der Ansprüche 1 bis 3 auf dem Substrat (2) auszubilden.

5. Verfahren nach Anspruch 4, **dadurch gekennzeichnet, dass** eine pulverförmige quellfähige Substanz (4) zur Herstellung des Beschichtungsmaterials eingesetzt wird.

6. Verfahren nach einem der vorhergehenden Ansprüche 4 oder 5, **dadurch gekennzeichnet, dass** das Beschichtungsmaterial durch Trockenmischen eines pulverförmigen Matrixmaterials mit der quellfähigen Substanz (4) erhalten wird.

7. Verfahren nach einem der vorhergehenden Ansprüche 4 oder 5, **dadurch gekennzeichnet, dass** das Beschichtungsmaterial durch Synthetisierung des Matrixmaterials in Gegenwart der quellfähigen Substanz (4) und anschließendes Pulverisieren des synthetisierten Matrixmaterials erhalten wird.

8. Verfahren nach einem der vorhergehenden Ansprüche 4 oder 5, **dadurch gekennzeichnet, dass** das Beschichtungsmaterial durch Schmelzemischen des Matrixmaterials in Gegenwart der quellfähigen Substanz (4) und anschließendes Vermahlen der erstarrten Mischung erhalten wird.

9. Pulverförmiges Beschichtungsmaterial zur Ausbildung einer Funktionsschicht (3) eines quellfähigen Beschichtungssystems (1) als Schutzbeschichtung durch Applikation des Beschichtungsmaterials mit einem Pulverbeschichtungsverfahren, beinhaltend wenigstens ein thermoplastisches und/oder ein thermoplastisch-elastisches Matrixmaterial und wenigstens eine quellfähige Substanz (4), wobei die quellfähige Substanz (4) in der Funktionsschicht (3) in das Matrixmaterial eingebunden ist.

## Claims

1. Metallic substrate (2) and/or metallic substructure with a swellable coating system (1) as a protective coating, wherein the coating system (1) has at least one functional layer (3), wherein the functional layer (3) is obtained by application of a powdery coating material to the substrate (2) and/or the substructure, wherein the coating material comprises at least one thermoplastic or thermoplastic-elastic matrix material and at least one swellable substance (4) and wherein the swellable substance (4) is incorporated into the matrix material in the functional layer (3).

2. Substrate (2) and/or substructure according to claim 1, **characterized in that** the degree of swelling of the functional layer (3), relative to the increase in weight of the functional layer (3) when storing the functional layer (3) in fully desalinated water and reaching the maximum water absorption, is between 100 % and 800 %.

3. Substrate (2) and/or substructure according to claim 1 or 2, **characterized in that** the proportion of swellable substance (4) in the functional layer (3) amounts between 1 wt.-% and 50 wt.-%.

4. Method for producing a protective coating on a metallic substrate (2) and/or metallic substructure, wherein a powdery coating material comprising at least one thermoplastic or thermoplastic-elastic matrix material and at least one swellable substance (4) is applied to the substrate (2) in at least one coating step in order to form at least one functional layer (3) of a swellable coating system (1) according to one of claims 1 to 3 on the substrate (2).

5. Method according to claim 4, **characterized in that** a powdery swellable substance (4) is used for producing the coating material.

6. Method according to one of the preceding claims 4 or 5, **characterized in that** the coating material is obtained by dry mixing of a powdery matrix material with the swellable substance (4).

**7.** Method according to one of the preceding claims 4 or 5, **characterized in that** the coating material is obtained by synthesizing the matrix material in the presence of the swellable substance (4) and following pulverizing the synthesized matrix material.

**8.** Method according to one of the preceding claims 4 or 5, **characterized in that** the coating material is obtained by melt-mixing the matrix material in the presence of the swellable substance (4) and following milling of the solidified mixture,

**9.** Powdery coating material for forming a functional layer (3) of a swellable coating system (1) as a protective coating by application of the coating material with a powder coating method, comprising at least one thermoplastic and/or a thermoplastic-elastic matrix material and at least one swellable substance (4), wherein the swellable substance (4) is incorporated in the matrix material in the functional layer (3).

**Revendications**

**1.** Substrat métallique (2) et/ou fond métallique avec un système de revêtement gonflable (1) comme revêtement de protection, le système de revêtement (1) présentant au moins une couche fonctionnelle (3), la couche fonctionnelle (3) étant obtenue par application d'un matériau de revêtement pulvérulent sur le substrat (2) et/ou le substrat, le matériau de revêtement comprenant au moins un matériau de matrice thermoplastique ou thermoplastique-élastique et au moins une substance gonflable (4) et la substance gonflable (4) étant incorporée dans le matériau de matrice dans la couche fonctionnelle (3).

**2.** Substrat (2) et/ou fond selon la revendication 1, **caractérisé en ce que** le degré de gonflement de la couche fonctionnelle (3), par rapport à l'augmentation de poids de la couche fonctionnelle (3) en cas d'incorporation de la couche fonctionnelle (3) dans de l'eau entièrement déminéralisée et en cas d'atteinte de l'absorption maximale d'eau, est compris entre 100 % et 800 %.

**3.** Substrat (2) et/ou fond selon la revendication 1 ou 2, **caractérisé en ce que** la proportion de substance gonflable (4) dans la couche fonctionnelle (3) est comprise entre 1 % et 50 % en poids.

**4.** Procédé de fabrication d'un revêtement de protection sur un substrat métallique (2) et/ou un fond métallique, dans lequel un matériau de revêtement pulvérulent comprenant au moins un matériau de matrice thermoplastique ou thermoplastique-élastique et au moins une substance gonflable (4) est appliqué sur le substrat (2) dans au moins une étape de revêtement pour former au moins une couche fonctionnelle (3) d'un système de revêtement gonflable (1) selon l'une des revendications 1 à 3 sur le substrat (2).

**5.** Procédé selon la revendication 4, **caractérisé en ce qu'**une substance pulvérulente gonflable (4) est utilisée pour la production du matériau de revêtement.

**6.** Procédé selon l'une des revendications 4 ou 5 précédentes, **caractérisé en ce que** le matériau de revêtement est obtenu par mélange à sec d'un matériau de matrice pulvérulent avec la substance gonflable (4).

**7.** Procédé selon l'une des revendications 4 ou 5 précédentes, **caractérisé en ce que** le matériau de revêtement est obtenu en synthétisant le matériau de matrice en présence de la substance gonflable (4) et en pulvérisant ensuite le matériau de matrice synthétisé.

**8.** Procédé selon l'une des revendications précédentes 4 ou 5, **caractérisé en ce que** le matériau de revêtement est obtenu en mélangeant à l'état fondu le matériau de la matrice en présence de la substance gonflable (4) et en broyant ensuite le mélange solidifié.

**9.** Matériau de revêtement pulvérulent pour la formation d'une couche fonctionnelle (3) d'un système de revêtement gonflable (1) comme revêtement de protection par application du matériau de revêtement par un procédé de revêtement en poudre, comprenant au moins un matériau de matrice thermoplastique et/ou thermoplastique-élastique et au moins une substance gonflable (4), la substance gonflable (4) étant incorporée dans le matériau de matrice dans la couche fonctionnelle (3).

Fig. 1

Fig. 2

Fig. 3

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2013048917 A1
- WO 2012104296 A1
- WO 0123479 A1
- WO 9708579 A1

- DE 69915511 T2
- US 5817713 A
- US 20040209069 A1